# EUROPÄISCHE PATENTANMELDUNG

(11) **EP 2 408 081 A1**
(43) Veröffentlichungstag der Anmeldung: **18.01.2012**
(21) Anmeldenummer: 10169828.0
(22) Anmeldetag: 16.07.2010
(51) Int. Cl.: H02J 1/06, H02M 7/49

(54) **Modularer Multiniveau Umrichter**

(71) Anmelder: ABB Technology AG, 8050 Zürich (CH)
(72) Erfinder: Steimer, Peter, CH-5420, Ehrendingen (CH)
(74) Vertreter: ABB Patent Attorneys

(57) **Zusammenfassung**

Ein modulare Multiniveau-Umrichter 10 zum Gleichrichten einer Wechselspannung in eine Gleichspannung weist nicht nur unipolare Umrichterzellen 26b auf, sondern auch bipolare Umrichterzellen 26a. Auf diese Weise kann die Ausgangsspannung besonders variabel eingestellt werden.

## Beschreibung

### Technisches Gebiet

Diese Erfindung betrifft einen modularen Multiniveau-Umrichter, ein Spannungsversorgungssystem, ein Umrichtersystem, ein Umrichterschutzsystem, ein Netzwerk zum Übertragen von Strom, ein Verfahren zum Gleichrichten und eine Verwendung eines modularen Multiniveau-Umrichters.

### Stand der Technik

Obwohl viele Netzwerke zum Übertragen von elektrischer Spannung und elektrischem Strom vor allem im Mittelspannungsbereich (zwischen 1 kV und 50 kV) mit Wechselstrom betrieben werden, besteht ein Bedarf für Gleichspannungs-Netzwerke im Mittel- und Hochspannungsbereich, beispielsweise für besonders verlustarme Energieübertragung. Insbesondere werden Komponenten für diese Netzwerke benötigt, die Wechselspannung in Gleichspannung und umgekehrt umwandeln können, mit der dann ein Gleichspannungsnetzwerk betrieben werden kann.

Ein Beispiel für eine Anwendung, die ein Gleichspannungs-Netzwerk im Mittelspannungsbereich benötigen kann, ist ein Lichtbogenofen, der über ein Gleichspannungs-Netzwerk mit einem Gleichrichter verbunden ist, der wiederum Wechselspannung im Mittelspannungsbereich in Gleichspannung im Mittelspannungsbereich für den Lichtbogenofen umwandelt.
Die zurzeit bekannten Lösungen für Mittelspannungs-Gleichspannungs-Netzwerke (medium voltage digital current grids, MVDC-Netzwerke) basieren auf drei verschiedenen Ansätzen.

Der erste Ansatz umfasst MVDC-Netzwerke mit konstanter Gleichspannung, die mit einem aktiven Gleichrichter zur Seite des Wechselspannungs-Netzwerks hin ausgestattet sind. Diese Netzwerke können mit einem weiteren aktiven maschinenseitigen Gleichrichter (beispielsweise für einen Generator) ausgestattet sein, wobei der weitere aktive Gleichrichter eine niedrige Spannung (beispielsweise aus dem Generator) auf die konstante Gleichspannung des Netzwerks erhöht und wobei der weitere aktive Gleichrichter mit einem hohen oder optimalen Leistungsfaktor für die Maschine betrieben werden kann.

Ein zweiter Ansatz umfasst MVDC-Netzwerke mit variabler Gleichspannung, die mit einem aktiven Gleichrichter zur Seite des Wechselspannungs-Netzwerks hin ausgestattet sind. Diese Netzwerke können darüber hinaus einen passiven maschinenseitigen Gleichrichter aufweisen, beispielsweise einen Dioden-Gleichrichter. Dies kann jedoch zu starken Oberschwingungen bei Maschinen (zum Beispiel elektrische Motoren oder Generatoren) mit einer Vielzahl von Spulen führen. Außerdem kann dieser Ansatz zu einem schlechten bzw. niedrigen Leistungsfaktor aufgrund hoher Impedanzen in der Maschine führen, wenn keine Reihen- oder Nebenkondensatoren verwendet werden. Zusätzlich kann ein derartiges System einen Gleichstrom-zu-Gleichstrom-Wandler aufweisen, der die Spannung für die Maschine auf die Gleichspannung des MVDC-Netzwerks wandelt, die auch für den aktiven Gleichrichter benötigt wird.

Ein dritter Ansatz umfasst MVDC-Netzwerke mit konstanter Gleichspannung, die mit einem aktiven modularen Multiniveau-Umrichter auf Wechselspannungs-Netzwerkseite und mit einem modularen Multiniveau-Umrichter auf Seite der Maschine ausgestattet sind. Damit kann eine niedrige Wechselspannung auf die konstante Mittelspannung erhöht werden und die Maschine mit einem optimalen Leistungsfaktor betrieben werden.

Bei Windkraft-Anlagen ist auch bekannt, die von einer Windkraft-Turbine stammende Wechselspannung mittels eines indirekten oder direkten modularen Multiniveau-Umrichters von einer Spannung einer ersten Frequenz in eine weitere Spannung einer zweiten Frequenz umzuwandeln. Für Anwendungen mit niedriger Frequenz (die beispielsweise dann auftreten kann, wenn nur wenig Wind weht) kann jedoch bei einem Matrixgleichrichter die gespeicherte Energie in den bipolaren Zellen des Matrixumrichters kleiner sein als in den unipolaren Zellen eines indirekten Umrichters, bei dem die gespeicherte Energie mit niedrigen Frequenzen steigt.

Weiter ist bekannt, einen modularen Multiniveau-Matrix-Umrichter dafür zu verwenden, Niederfrequenznetzwerke mit Strom zu versorgen. Beispielsweise werden derartige Matrix-Umrichter dazu verwendet, eine dreiphasige Mittelspannung aus einem großflächigen Netzwerk in einem einphasigen Wechselstrom mit 15 kV Spannung und einer Frequenz von 16 2/3 Hz umzuwandeln, was beispielsweise für den elektrischen Maschinenverkehr benötigt wird.

Insgesamt besteht also der Bedarf, alternative und neue Lösungen für Mittelspannungs-Gleichspannungs-Netzwerke und deren Komponenten bereitzustellen.

### Darstellung der Erfindung

Es ist Aufgabe der Erfindung ein MVDC-Netzwerk und insbesondere einen Umrichter bereitzustellen mit denen die Gleichspannung im Netzwerk möglichst variabel eingestellt werden kann. Dabei soll das MVDC-Netzwerk möglichst einfach zu warten und möglichst betriebssicher sein.

Diese Aufgabe wird durch den Gegenstand der unabhängigen Ansprüche gelöst. Weitere Ausführungsformen der Erfindung ergeben sich aus den abhängigen Ansprüchen.
Ein erster Aspekt der Erfindung betrifft einen modularen Multiniveau-Umrichter zum Gleichrichten von wenigstens zwei Phasen einer Wechselspannung in eine Gleichspannung oder zum Wechselrichten einer Gleichspannung in wenigstens zwei Phasen einer Wechselspannung.

Gemäß einer Ausführungsform der Erfindung weist der Umrichter für jede Phase aus den wenigstens zwei Phasen einen Umrichterzweig auf. Ein modularer Multiniveau-Umrichter ist dabei ein Umrichter, der für jede der Phasen wenigstens zwei Umrichterzweige aufweist, die wieder jeweils eine Anzahl von wenigstens zwei Umrichterzellen aufweisen. Gemäß einer Ausführungsform der Erfindung weist der Umrichterzweig auf: in Reihe geschaltete erste Umrichterzellen, die die Phase mit einem ersten (beispielsweise eine positive Spannung aufweisenden) Gleichspannungsausgang verbinden, in Reihe geschaltete zweite Umrichterzellen, die die Phase mit einem zweiten (beispielsweise eine neutral Spannung aufweisenden) Gleichspannungsausgang verbinden, wobei wenigstens eine Umrichterzelle aus den ersten und zweiten Umrichterzellen eine bipolare Umrichterzelle ist.

Eine Umrichterzelle kann dabei einen Energiespeicher, beispielsweise einen Kondensator, und mehrere Halbleiterschalter umfassen. Die Halbleiterschalter können dabei von einer Steuerung des Umrichters derart angesteuert werden, dass Strom in den Energiespeicher geleitet werden kann, Strom aus dem Kondensator in den Umrichterzweig der Zelle geleitet werden kann oder Strom durch den Umrichterzweig am Kondensator vorbeigeleitet werden kann.

Der Unterschied zwischen einer bipolare Umrichterzelle (Vollbrücke) und einer unipolaren Umrichterzelle (Halbbrücke) kann dadurch definiert werden, dass bei einer bipolaren Umrichterzelle die Spannung am Kondensator in beiden Richtungen (d. h. in unterschiedlicher Polung) in den Umrichter zurückgeleitet werden kann, was bei einer unipolaren Umrichterzelle nicht möglich ist. Bei einer unipolaren Umrichterzelle kann die in Energiespeicher geleitete Spannung nur wieder in dieser Richtung aus dem Energiespeicher entnommen werden.

Bei den meisten Netzwerken wird der modulare Multiniveau-Umrichter drei Phasen einer Wechselspannung (das heißt Drehstrom) in Gleichspannung umwandeln und/oder umgekehrt.

Als Kern der Erfindung kann dabei verstanden werden, dass der modulare Multiniveau-Umrichter zum Gleichrichten nicht nur unipolare Umrichterzellen aufweist, sondern auch bipolare Umrichterzellen. Auf diese Weise kann erreicht werden, dass die Ausgangs- bzw. Eingangs-Gleichspannung des Umrichters besonders variabel gestaltet werden kann, da die Umrichterzellen des Umrichters derart angesteuert werden können, dass nicht nur eine Summe der wenigstens zwei Phasen des Wechselstroms gebildet werden kann, sondern auch deren Differenz. Auf diese Weise kann die Ausgangsspannung besonders variabel eingestellt werden.

Von der Topologie her kann der modulare Multiniveau-Umrichter genauso aufgebaut sein, wie ein Matrix-Umrichter, der dazu verwendet wird, ein Wechselstrom mehrerer Phasen einer ersten Spannung in einen Wechselstrom einer Phase einer anderen Spannung umzuwandeln, wie es beispielsweise für die Stromversorgung von Zügen gemacht wird. Jedoch wird der modulare Multiniveau-Umrichter derart gesteuert, dass er im Betrieb eine Ausgangsfrequenz von 0 Hz aufweist. Mit anderen Worten kann der modulare Multiniveau-Umrichter ein Matrix-Umrichter sein, der mit einer variablen Ausgangsspannung betrieben wird, die eine Gleichspannung ist. Auf diese Weise kann es möglich sein, ein Gleichspannungs-Netzwerk mit dem modularen Multiniveau-Umrichter aufzubauen, das mit Gleichspannungsquellen und/oder Gleichspannungslasten verbunden ist.

Gemäß einer Ausführungsform der Erfindung ist wenigstens eine Umrichterzelle aus den ersten und zweiten Umrichterzellen eine unipolare Umrichterzelle. Es kann aber auch möglich sein, dass gemäß einer Ausführungsform der Erfindung alle ersten und zweiten Umrichterzellen bipolare Umrichterzellen sind.

Es ist nicht nur möglich, dass alle Umrichterzellen des modularen Multiniveau-Umrichters bipolare Umrichterzellen sind, sondern es ist auch möglich, dass ein Teil der Umrichterzellen unipolare Umrichterzellen sind. Umfasst der modulare Multiniveau-Umrichter ausschließlich oder größtenteils bipolare Umrichterzellen, kann die Ausgangsspannung des Umrichters besonders variabel gestaltet werden, das heißt von 0 V bis zu einer maximalen Gleichspannung. Wird eine Mischung aus bipolaren und unipolaren Umrichterzellen für den Umrichter verwendet, so kann dies zwar den maximalen Betriebsbereich für die Ausgangsspannung vermindern, die dann von einer minimalen Ausgangsspannung bis zu der maximalen Ausgangsspannung reicht, allerdings können für den Umrichter dann einfacher aufgebaute Umrichterzellen verwendet werden.

Insgesamt ist es möglich, dass jeder Zweig des Umrichters aus einer Anzahl von Umrichterzellen besteht, wovon eine erste Anzahl von Umrichterzellen bipolare Umrichterzellen und eine zweite Anzahl von Umrichterzellen unipolare Umrichterzellen sind. Die Zweige des Umrichters können alle mit einer gleichen Anzahl von bipolaren und unipolaren Umrichterzellen ausgestattet sein.

Gemäß einer Ausführungsform der Erfindung weist der Umrichter weiter eine Steuerung zum Steuern von Halbleiterschaltern der ersten und zweiten Umrichterzellen auf, wobei die Steuerung dazu ausgeführt ist, die Halbleiterschalter derart anzusteuern, dass die Gleichspannung zwischen dem ersten und zweiten Gleichspannungsausgang zwischen einer Minimalspannung und einer Maximalspannung einstellbar ist, wobei die Maximalspannung kleiner oder gleich der maximalen Spannung der wenigstens zwei Phasen ist. Nur mit einem Matrixumrichter, der Vollbrücken umfasst, ist es möglich ein derart variable Gleichspannung zu erzeugen.

Gemäß einer Ausführungsform der Erfindung ist die Minimalspannung kleiner als 70% (beispielsweise kleiner als 50%) der maximalen Spannung ist. Es ist möglich, dass die Minimalspannung in etwa 0V beträgt.

Ein weiterer Aspekt der Erfindung betrifft ein Spannungsversorgungssystem mit einem Umrichter, so wie er im Vorstehenden und im Nachfolgenden beschrieben ist. Gemäß einer Ausführungsform der Erfindung ist der Umrichter dazu ausgeführt, ein Gleichspannungsgerät mit variabler Gleichspannungsabgabe oder -aufnahme mit einem mehrphasigen Wechselspannungsnetz zu verbinden. Das Gleichspannungsgerät ist beispielsweise eine Gleichspannungslast, ein Gleichspannungs-Energiespeicher oder eine Gleichspannungsquelle.

Das Spannungsversorgungssystem kann dazu verwendet werden, eine Mehrzahl oder eine Kombination von Gleichspannungslasten, Gleichspannungs-Energiespeichern und/oder Gleichspannungsquellen, die insbesondere eine gleichstromabhängige Gleichspannungsaufnahme bzw. -abgabe aufweisen können, zu verbinden. Eine Gleichspannungslast kann dabei ein Chlorelektrolysesystem, ein Gleichspannungslichtbogen oder Plasmaofen oder aber auch eine Anregungseinheit für eine Synchronmaschine sein. Ein Gleichspannungsenergiespeicher kann beispielsweise eine Batterie sein. Ein Beispiel für eine Gleichspannungsquelle ist eine Brennstoffzelle.

Das Spannungsversorgungssystem kann eine Mehrzahl von Wechselspannungsquellen, zum Beispiel Windturbinen, mit einem großräumigen Stromversorgungsnetzwerk verbinden.

Ein weiterer Aspekt der Erfindung betrifft ein Umrichtersystem zum Verbinden wenigstens einer Wechselspannungsquelle mit einem Wechselspannungsnetz. Gemäß einer Ausführungsform der Erfindung weist das Umrichtersystem auf: wenigstens einen Gleichrichter zum Gleichrichten des Wechselstroms aus der Wechselspannungsquelle in einen Gleichstrom und einen Umrichter zum Wechselrichten des Gleichstroms in die Wechselspannung des Wechselspannungsnetzes, so wie er im Vorstehenden und im Nachfolgenden beschrieben ist.

Beispielsweise kann in den Wechselspannungsquellen erzeugter Wechselstrom von Gleichrichtern (beispielsweise ein Gleichrichter für jede Wechselspannungsquelle) gleichgerichtet und in ein Gleichspannungs-Netzwerk eingespeist werden. Die Gleichspannung im Gleichspannungs-Netzwerk kann dabei variabel sein, beispielsweise abhängig davon, wie viel Leistung die Wechselspannungsquellen gerade erzeugen. Über das Gleichspannungs-Netzwerk wird die Spannung dann zu dem Umrichter transportiert, der sich weit entfernt von den Gleichrichtern befinden kann (dies können mehr als 100 m, aber auch mehr als 10 km sein). Der Umrichter wandelt die variable Gleichspannung in eine Wechselspannung wenigstens einer Phasen um, die in ein Wechselspannungs-Netzwerk, beispielsweise das großräumige Stromversorgungsnetzwerk, eingespeist wird.

Gemäß einer Ausführungsform der Erfindung umfasst der Gleichrichter einen passiven Gleichrichter oder einen unidirektionalen aktiven Gleichrichter. Der passive Gleichrichter kann ein Diodengleichrichter und der unidirektionale aktive Gleichrichter ein Vienna-Gleichrichter sein. Wechselspannungsquellen können insbesondere mit erneuerbaren Energiequellen angetriebene Generatoren sein, beispielsweise Windkraftanlagen, Wasserkraftanlagen oder von Gezeiten angetriebene Generatoren.

Gemäß einer Ausführungsform der Erfindung ist der Gleichrichter derart optimiert, dass er geringe Oberschwingungen erzeugt. Um geringe Oberschwingungen zu erzeugen, kann der Gleichrichter ein Diodengleichrichter für eine Maschine mit einer Mehrzahl von Spulen sein. Der Gleichrichter kann auch einfach eine Brücke mit in Reihe geschaltete Dioden oder ein unidirektionaler aktiver Gleichrichter, beispielsweise ein Vienna-Gleichrichter, sein.

Gemäß einer Ausführungsform der Erfindung ist der Gleichrichter derart optimiert, dass er einen hohen Leistungsfaktor bezüglich der Wechselspannungsquelle aufweist. Ein guter Leistungsfaktor für einen Generator mit Permanentmagneten oder aber auch mit Induktivität kann dadurch erreicht werden, dass Neben- oder Reihen-Kondensatoren verwendet werden und/oder genügend Induktivität vorhanden ist, so dass die Dioden sicher umgeschaltet werden können.

Ein weiterer Aspekt der Erfindung betrifft ein Umrichterschutzsystem mit einem Umrichter so wie er im Vorstehenden und im Nachfolgenden beschrieben ist. Gemäß einer Ausführungsform der Erfindung weist das Umrichterschutzsystem auf: einen Wechselspannungsunterbrecher für jede der Phasen und eine Schutzschaltung für jede der ersten und zweiten Umrichterzellen, Die Schutzschaltung kann antiparallele Thyristoren zum Überbrücken der Umrichterzelle aufweisen.

Ein einfacher Schutz eines MVDC-Netzwerks kann dadurch erreicht werden, dass auf Seite des Wechselspannungs-Netzwerks Wechselstromunterbrecher vorgesehen sind. Das kann heißen, dass der Schutz des MVDC-Netzwerks nicht im Gleichspannungsstromkreis, sondern im Wechselspannungsstromkreis erfolgt. Darüber hinaus kann für eine oder mehrere der Umrichterzellen des Umrichters ein Überbrückungssystem aus antiparallelen Thyristoren vorgesehen sein, die geschaltet werden können, um die Umrichterzellen zu überbrücken zu schützen, falls auf der Wechselspannungsseite und/oder der Gleichspannungsseite ein Kurzschluss einer Mehrzahl von Wegen mit niedriger Impedanz zu einem gemeinsamen Potenzial, beispielsweise dem Grundpotenzial, erfolgt.

Ein weiterer Aspekt der Erfindung betrifft ein Netzwerk zum Übertragen von Mittel- oder Hochspannung mit einem Umrichter, so wie er im Vorstehenden und im Nachfolgenden beschrieben ist. Gemäß einer Ausführungsform der Erfindung weist das Netzwerk ein Gleichspannungsnetzwerk zum Übertragen von Strom zu oder vom Umrichter auf, wobei der Umrichter zum Verarbeiten einer variablen Gleichspannung im Gleichspannungsnetzwerk ausgeführt ist.

Gemäß einer Ausführungsform der Erfindung weist das Netzwerk ein Spannungsversorgungssystem, ein Umrichtersystem und/oder ein Umrichterschutzsystem auf, so wie sie im Vorstehenden und im Nachfolgenden beschrieben ist.

Ein weiterer Aspekt der Erfindung betrifft ein Verfahren zum Gleichrichten von wenigstens zwei Phasen einer Wechselspannung in eine Gleichspannung oder zum Wechselrichten einer Gleichspannung in wenigstens zwei Phasen einer Wechselspannung. Gemäß einer Ausführungsform der Erfindung umfasst das Verfahren die Schritte: Umwandeln der Wechselspannungen jeder Phase in eine Gleichspannung mittels eines Umrichters, so wie er im Vorstehenden und im Nachfolgenden beschrieben ist; Einstellen der Gleichspannung zwischen einer Minimalspannung und einer Maximalspannung, wobei die Maximalspannung kleiner oder gleich der maximalen Spannung der wenigstens zwei Phasen ist und die Minimalspannung kleiner als 70 % der maximalen Spannung ist.

Es ist zu verstehen, dass Verfahrensschritte, die in Bezug auf die im Vorstehenden und Nachstehenden beschriebenen Vorrichtungen beschrieben werden, auch Ausführungsformen des Verfahrens sein können und umgekehrt.

Ein weiterer Aspekt der Erfindung betrifft eine Verwendung eines modularen Multiniveau-Matrix-Umrichters zum Gleichrichten von wenigstens zwei Phasen einer Wechselspannung in eine Gleichspannung, die kleiner als die Maximalspannung der Wechselspannung ist.

Gemäß einer Ausführungsform der Erfindung kann ein MVDC-Netzwerk (beispielsweise im Mittelspannungsbereich) mit variabler Spannung direkt mit Gleichspannungslasten, Gleichspannungsspeichern oder Gleichspannungsquellen verbunden werden und über einen einfachen Einweg-Gleichrichter mit Wechselspannungsquellen verbunden werden.

Gemäß einer Ausführungsform der Erfindung kann ein MVDC-Netzwerk mit einer optimalen Spannung für die Gleichspannungs- und/oder Wechselspannungs-Lasten und - quellen betrieben werden.

Gemäß einer Ausführungsform der Erfindung kann ein MVDC-Netzwerk mit variabler Spannung mit einem Wechselspannungs-Netzwerk verbunden werden, wobei keine separaten Gleichspannungs-zu-Gleichspannungs-Wandler benötigt werden.

Gemäß einer Ausführungsform der Erfindung wird ein modularer Multiniveau-Matrixumrichter mit bipolaren Umrichterzellen oder einer Mischung aus unipolaren und bipolaren Umrichterzellen dazu verwendet, ein MVDC-Netzwerk mit variabler Spannung mit einem Wechselspannungs-Netzwerk zu verbinden.

Gemäß einer Ausführungsform der Erfindung wird das Gleichspannungs-Netzwerk mit variabler Spannung dazu verwendet, einen oder mehrere Gleichspannungslasten und/oder Gleichspannungs-Energiespeicher oder -Quellen optimal zu versorgen.

Gemäß einer Ausführungsform der Erfindung wird ein MVDC-Netzwerk dazu verwendet, eine oder mehrere Wechselspannungsquellen mittels einfacher passiver Dioden-Gleichrichter mit einem Wechselspannungs-Netzwerk zu verbinden. Dabei sind die Wechselspannungsquellen beispielsweise voneinander entfernte erneuerbare Energiequellen, wie Windkraft-, Gezeiten- oder Wasserkraft-Turbinen.

Gemäß einer Ausführungsform der Erfindung wird das MVDC-Netzwerk mit variabler Spannung dazu verwendet, LVDC- bzw. MVDC-Umrichter mit LVDC-Quellen zu verbinden. Die LVDC-Quellen können dabei voneinander entfernte erneuerbare Energiequellen sein.

Gemäß einer Ausführungsform der Erfindung kann der Schutz eines MVDC-Netzwerks mit variabler Spannung dadurch bewerkstelligt werden, dass lediglich auf Seite des Wechselspannungs-Netzwerks Schutzgeräte (Unterbrecher und/oder Leistungselektronik) vorgesehen sind und/oder dadurch, dass lokale Schutzgeräte auf Niveau der Subsysteme, das heißt auf Niveau der Umrichterzellen, des Umrichters vorgesehen sind (beispielsweise ein Paar von antiparallelen Thyristoren zur Überbrückung jeder Umrichterzelle). In einer Situation des schlimmsten Fehlerfalls kann damit der Umrichter und auch das MVDC-Netzwerk aktiv durch die lokalen Schutzgeräte geschützt werden.

Im Folgenden werden Ausführungsbeispiele der Erfindung mit Bezug auf die beiliegenden Figuren detailliert beschrieben.

### Kurze Beschreibung der Zeichnungen

Fig. 1 zeigt einen Umrichter gemäß einer Ausführungsform der Erfindung.
Fig. 2a zeigt eine bipolare Umrichterzelle.
Fig. 2b zeigt eine unipolare Umrichterzelle.
Fig. 3a zeigt die für eine Phase vorgesehenen Zweige eines Umrichters.
Fig. 3b zeigt die mit den in der Fig. 3a gezeigten Zweigen mögliche Spannung.
Fig. 4a zeigt die für eine Phase vorgesehenen Zweige eines Umrichters gemäß einer Ausführungsform der Erfindung.
Fig. 4b zeigt die mit dem in der Fig. 4a gezeigten Teil des Umrichters mögliche erzeugte Spannung gemäß einer Ausführungsform der Erfindung.
Fig. 5 zeigt ein Umrichtersystem gemäß einer Ausführungsform der Erfindung.
Fig. 6 zeigt ein Spannungsversorgungssystem gemäß einer Ausführungsform der Erfindung.
Fig. 7 zeigt ein Umrichterschutzsystem gemäß einer Ausführungsform der Erfindung.
Fig. 8 zeigt ein Umrichterschutzsystem gemäß einer Ausführungsform der Erfindung.
Fig. 9 zeigt ein Umrichterschutzsystem gemäß einer Ausführungsform der Erfindung.

Die in den Figuren verwendeten Bezugszeichen und ihre Bedeutung sind in zusammenfassender Form in der Bezugszeichenliste aufgeführt. Grundsätzlich sind identische oder ähnliche Teile mit den gleichen Bezugszeichen versehen.

### Wege zur Ausführung der Erfindung

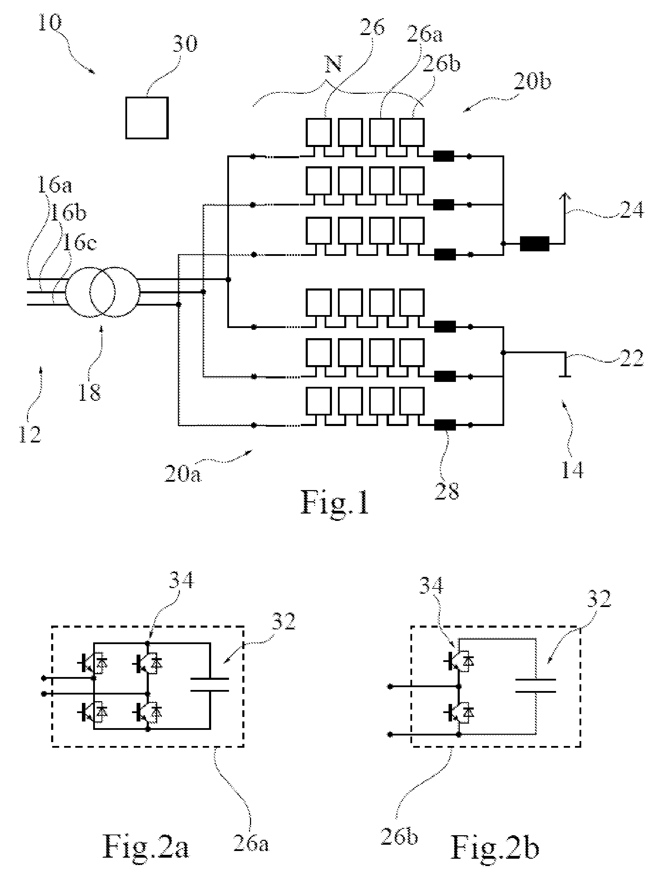

Fig. 1 zeigt einen Umrichter 10, der zwischen ein Wechselspannungs-Netzwerk 12 und ein Gleichspannungs-Netzwerk 14 geschaltet ist. Die drei Phasen 16a, 16b, 16c des Wechselspannungs-Netzwerks 12 können optional mittels eines Transformators 18 auf eine andere Spannung transformiert werden (beispielsweise von Hochspannung auf Mittelspannung) und werden dann in mehrere Umrichterzweige 20 des Umrichters 10 eingespeist. Jede der Phasen 16a, 16b, 16c ist dabei über einen ersten Umrichterzweig 20 mit einem Erdpotential 22 und über einen zweiten Umrichterzweig 20 mit einem Spannungspotential 24 des Gleichspannungs-Netzwerks 14 verbunden. Da der Umrichter 10 für den Betrieb mit drei Phasen 16a, 16b, 16c ausgeführt ist, umfasst er insgesamt jeweils drei erste Umrichterzweige 20a und drei zweite Umrichterzweige 20b.

Jeder der Umrichterzweige 20a, 20b umfasst wiederum N Umrichterzellen 26. Dabei können alle Umrichterzellen 26 bipolare Umrichterzellen 26a sein. Es ist aber auch möglich, dass ein Teil der Umrichterzellen 26 unipolare Umrichterzellen 26b sind. Zwischen den Potentialen 22, 24 des Gleichspannungs-Netzwerks 14 umfasst der Umrichter 10 noch für jeden Umrichterzweig 20a, 20b eine Induktion bzw. Drossel 28.

Zur Ansteuerung der Umrichterzellen 26 umfasst der Umrichter 10 eine Steuerung 30, die (wie nicht dargestellt ist) mit jeder der Umrichterzellen 26 bzw. deren Leistungshalbleiter verbunden ist.

Die Fig. 2a zeigt eine bipolare Umrichterzelle 26a, die einen Energiespeicher 32 in der Form eines Kondensators sowie vier Halbleiterschalter 34 umfasst. Die Halbleiterschalter 34 können von der Steuerung 30 zur Steuerung der Umrichterzelle 26a ein- und ausgeschaltet werden.

Die Fig. 2b zeigt eine unipolare Umrichterzelle 26b, die einen Energiespeicher 32 in der Form eines Kondensators sowie zwei Halbleiterschalter 34 aufweist, die auch von der Steuerung 30 zur Steuerung der Umrichterzelle 26b geöffnet und geschlossen werden können.

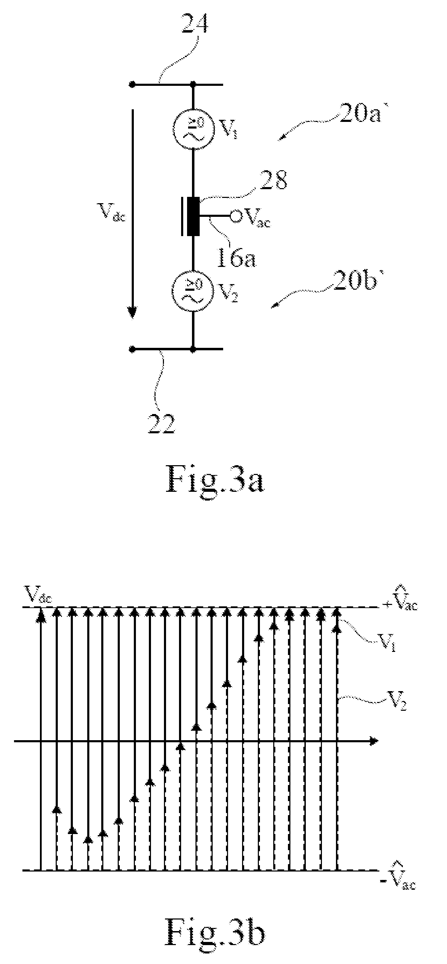

Die Fig. 3a zeigt den Teil eines direkten modularen Multiniveau-Umrichters, wie er aus dem Stand der Technik bekannt ist. Zum Umrichten einer Phase einer Wechselspannung V_{AC} in eine Gleichspannung V_{DC} weist der in der Fig. 3a dargestellte Umrichter zwei Umrichterzweige 20a', 20b' auf, die über eine Drossel 28 mit der Phase 16a verbunden sind. Die beiden Umrichterzweige 20a' und 20b' weisen dabei lediglich unipolare Umrichterzellen auf. Aufgrund dessen können die beiden Zweige 20a', 20b' nur positive Spannungen V₁ und V₂ aus der Wechselspannung V_{AC} erzeugen, was dazu führt, dass die Gleichspannung V_{DC} eine Summe (der Beträge) dieser beiden Spannungen ist.

Dies ist in der Fig. 3b dargestellt. Die Wechselspannung V_{AC} kann zwischen -V_{AC} und +V_{AC} schwanken. Die Spannungen V₁ und V₂ sind vom Betrag her immer kleiner als die Differenz zwischen -V_{AC} und +V_{AC}. Da die Spannungen V₁ und V₂ aufgrund der Zweige 20a', 20b' mit lediglich unidirektionalen Umrichterzellen nur addiert werden können, ist die Gleichspannung V_{DC} nicht variabel, sondern immer so groß wie die Potentialdifferenz zwischen dem Minimum und dem Maximum der Phase der Wechselspannung V_{AC}.

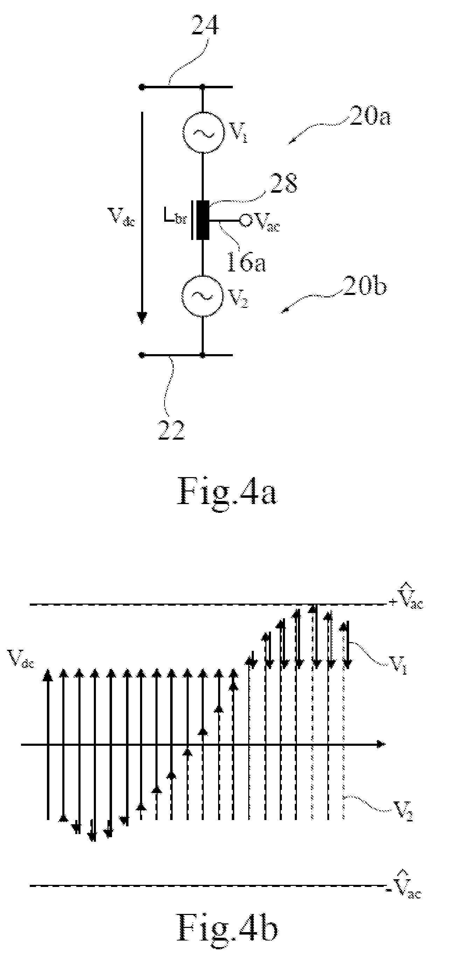

Wie in der Fig. 4a dargestellt ist, können jedoch anstatt der Umrichterzweige 20a', 20b', Umrichterzweige 20a, 20b verwendet werden, die neben den unipolaren Umrichterzellen auch noch bipolare Umrichterzellen enthalten bzw. nur bipolare Umrichterzellen enthalten. Da ein Umrichterzweig 20a, 20b auch eine Spannung V₁, V₂ erzeugen kann, die nicht nur positiv sondern auch negativ sein kann, ist es möglich, Gleichspannungen V_{DC} zu erzeugen, die kleiner sind als die Potentialdifferenz der Wechselspannung V_{AC}.

Dies ist in der Fig. 4b zu sehen. Aufgrund dessen, dass die Spannung V₁ bzw. V₂ bei einem Umrichterzweig 20a, 20b vom Vorzeichen her der Spannung am anderen Umrichterzweig 20a, 20b entgegengesetzt sein kann, können die Spannungen V₁ und V₂ auch voneinander subtrahiert werden. Bei den Umrichterzweigen 20a, 20b kann also auch eine gegenüber der Gleichspannung V_{DC} negative Spannung erzeugt werden. Dies funktioniert lediglich mit bipolaren Umrichterzellen. Damit ist es möglich, durch Steuern der Umrichterzweige 20a, 20b mittels der Steuerung 30 des Umrichters 10 eine Gleichspannung V_{DC} zu erzeugen, die von 0 V bis zu 2 V_{AC} reicht.

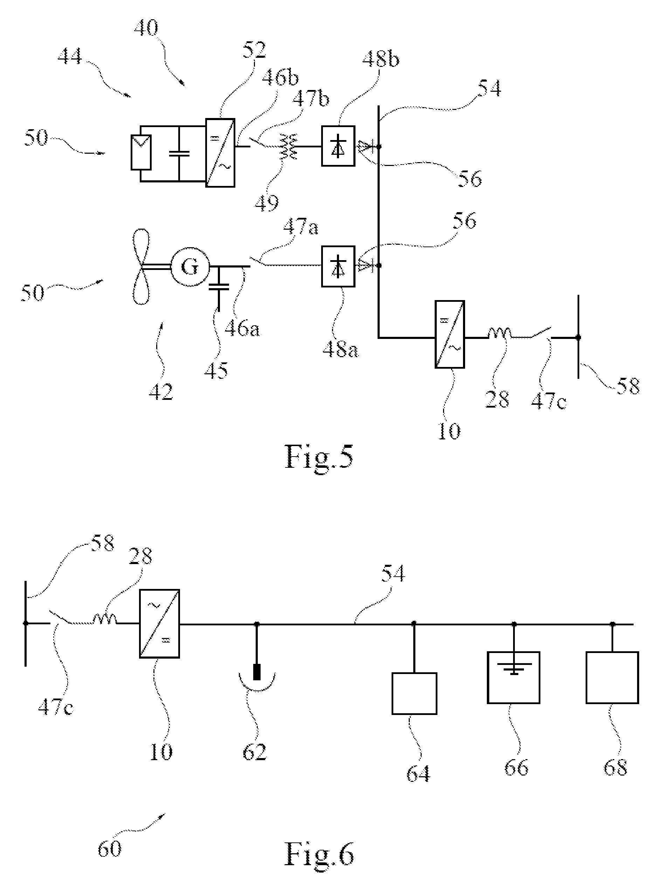

Fig. 5 zeigt ein System 40, das einen Umrichter 10 und mehrere (eventuell weit voneinander entfernte) Gleichspannungsquellen in der Form einer Windkraftanlage 42 und einer Solarzellenanlagen 44 umfasst. Der von einem Propeller angetriebene Generator der Windkraftanlage 42 erzeugt einen Wechselstrom, der über die Leitung 46a einem Gleichrichter 48a zugeführt wird, der die Wechselspannung in eine (eventuell variable) Gleichspannung umwandelt. Damit stellt die Windkraft-Anlage 42 zusammen mit dem Umrichter 48 eine Gleichspannungsquelle 50 dar.

Die Solarzellen der Solaranlage 44 erzeugen einen Gleichstrom, der über einen Umrichter 52 in eine Wechselspannung umgewandelt wird, die über eine Leitung 46b einem Gleichrichter 48b zugeführt wird, der aus der Wechselspannung einen Gleichstrom erzeugt. Damit stellt auch die Solaranlage 44 in Kombination mit dem Umrichter 52 und dem Gleichrichter 48b eine weitere Gleichspannungsquelle 50 dar.

Zwischen der Windkraft-Anlage 42 und dem Gleichrichter 48a können sich in der Leitung 46a noch ein Wechselstrom-Schutzgerät, beispielsweise ein Wechselstrom-Unterbrecher, befinden. Genauso können sich in der Wechselstromleitung 46b zwischen der Solaranlage 44 und dem Gleichrichter 48b ein Wechselstrom-Schutzgerät 47b und ein Transformator 49 befinden. Es ist ein Neben- oder Reihen-Kondensator 45 nach dem Generator G und vor dem Schalter 47a vorgesehen, mit welchem der Leistungsfaktor für die elektrische Maschine und/oder den Umrichter optimiert werden kann.

Die beiden Gleichspannungsquellen 50 sind dann über das MVDC-Netzwerk 54 mit dem Umrichter 10 verbunden. Optional kann jede (oder auch eine) der Gleichspannungsquellen 50 über eine Diode 56 mit dem MVDC-Netzwerk 54 verbunden sein. Der Umrichter 10 ist wiederum mit einem Mittelspannungs-Wechselstrom-Netzwerk 58 verbunden.

Zwischen dem Umrichter 10 und dem Mittelspannungs-Wechselspannungs-Netzwerk 58 befindet sich darüber hinaus eine Drossel 28 und ein weiteres Wechselstrom-Schutzgerät 47c. Wie aus der Fig. 5 hervorgeht, befinden sich die Unterbrecher 47a, 47b, 47c immer in Wechselstromleitungen.

Die Fig. 6 zeigt ein Spannungsversorgungssystem 60 mit einem Umrichter 10. Der Umrichter 10 ist über eine Drossel 28 und ein Wechselspannungs-Schutzgerät 47c, beispielsweise einem Unterbrecher, mit einem Mittelspannungs-Wechselstrom-Netzwerk 58 verbunden. Die aus dem Netzwerk 58 stammende Wechselspannung wird von dem Umrichter 10 in eine variable Gleichspannung umgewandelt und in ein MVDC-Netzwerk 54 eingespeist. Mit dem MVDC-Netzwerk 54 sind eine Mehrzahl von Lasten und Spannungsquellen verbunden: Ein Lichtbogenofen 62 oder auch ein Plasmaerzeugungssystem 62, eine Brennstoffzelle 64, eine Batterie 66 und eine Elektrolyseeinrichtung 68. Diese Lasten und Quellen stellen Beispiele für Mittelspannungslasten und Mittelspannungs-Quellen dar, die um andere, beispielsweise industrielle, Lasten oder Quellen ergänzt werden können.

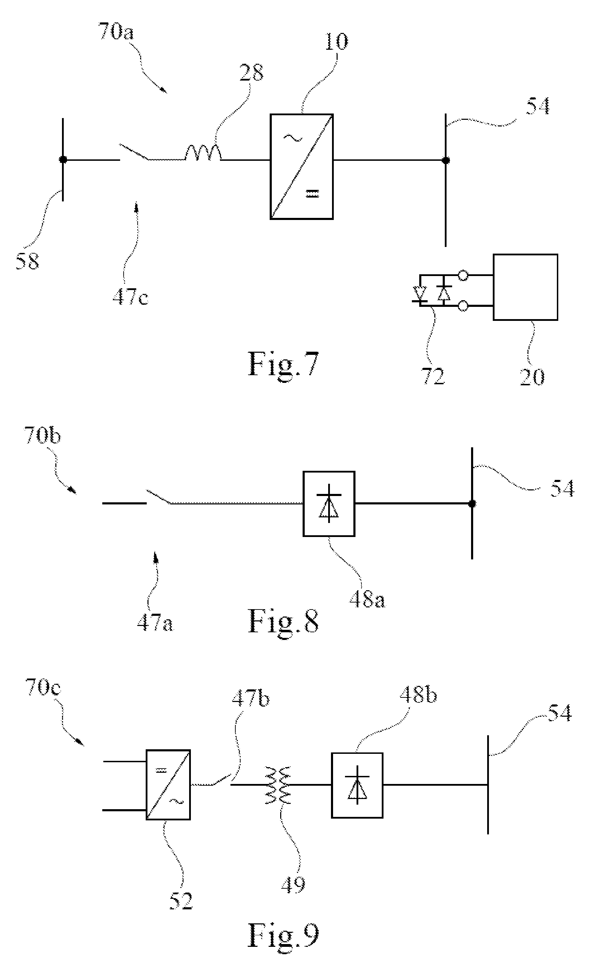

Die Fig. 7 zeigt ein Schutzsystem 70a, das einen Umrichter 10 umfasst. Der Umrichter 10 ist über eine optionale Drossel 28 und einem Wechselstrom-Schutzgerät 47c, beispielsweise einem Unterbrecher 47c, mit einem Mittelspannungs-Netzwerk 48 verbunden. Im Falle von Fehlern kann das Wechselspannungs-Schutzgerät 47c den Umrichter 10 und auch das mit dem Umrichter 10 verbundene MVDC-Netzwerk 54 schützen.

Darüber hinaus ist es möglich, dass die Umrichterzellen 20 des Umrichters 10 jeweils antiparallele Thyristorenbrücken als Schutzschaltung 72 aufweisen, die auch von der Steuerung 30 geschaltet werden können, beispielsweise wenn auf Seite des MVDC-Netzwerks ein Fehler auftritt. Im Falle eines Fehlers können die Umrichterzellen 20 mittels der Thyristorenbrücken 72 überbrückt werden.

Mit dem Schutzsystem ist es möglich, dass der Umrichter 10 sehr gut vor Fehlern im Netzwerk 58 als auch im Netzwerk 54 geschützt ist, obwohl im Gleichspannungs-Netzwerk 54 keine Schutzgeräte vorhanden sind.

Die Fig. 8 zeigt ein Schutzsystem 70b zum Schutz von Wechselspannungsquellen im Falle eines Fehlers. Dazu ist zwischen die Wechselspannungsquelle und dem Gleichrichter 48a ein Wechselstrom-Schutzgerät 47a geschaltet. Darüber hinaus kann der passive Umrichter 48 (der auch ein Diodengleichrichter sein kann) anstatt Dioden Thyristoren umfassen. Diese Thyristoren können im Falle eines Fehlers von der Steuerung 30 abgeschaltet werden, was neben dem Wechselspannungs-Schutzgerät 47a auch das MVDC-Netzwerk vor Fehlern schützen kann.

Die Fig. 9 zeigt ein weiteres Schutzsystem 70c, das einen Wechselspannungsschutz von isolierten Gleichspannungsquellen im Falle eines Fehlers bereitstellen kann. Die isolierte Gleichspannungsquelle (die eine Niederspannungs-Gleichstrom-Quelle sein kann, beispielsweise eine Solaranlage) ist über einen Umrichter 52 mit einem Transformator 49 verbunden. Die Niederspannung aus der Gleichspannungsquelle wird vom Umrichter 52 in eine Wechselspannung im Niederspannungs-Bereich umgewandelt, die vom Transformator 49 in eine höhere Wechselspannung transformiert wird, die wiederum von dem Gleichrichter 48b in eine Gleichspannung im Mittelspannungs-Bereich umgewandelt wird, die in das MVDC-Netzwerk 54 eingespeist wird.

Zum Schutz des Systems 70c ist zwischen Umrichter 52 und Transformator 49 ein Wechselstromschutzgerät 47b geschaltet. Zum besseren Schutz der dem Umrichter 52 nachgeschalteten Komponenten 49, 48b, 54 kann auch der Umrichter 52 im Falle eines Fehlers gestoppt werden, als auch das Wechselspannungs-Schutzgerät 47b geöffnet werden.

Insgesamt sind die in Fig. 7, 8 und 9 gezeigten Schutzsysteme 70a, 70b und 70c alle in der Ausführungsform der Fig. 5 verwirklicht.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 10: Umrichter
- 12: Wechselspannungsnetzwerk
- 14: Gleichspannungsnetzwerk
- 16a, 16b, 16c: Phase
- 18: Transformator
- 20a, 20b: erster, zweiter Umrichterzweig
- 22: Erdpotential
- 24: positives Potential
- 26: Umrichterzellen
- 26a: bipolare Umrichterzelle
- 26b: unipolare Umrichterzelle
- 28: Drossel
- 30: Steuerung
- 32: Kondensator
- 34: Halbleiterschalter
- 40: System
- 42: Windkraftanlage
- 44: Solaranlage
- 45: Neben- oder Reihen-Kondensatoren
- 46a, 46b: Leitung
- 47a, 47b: Unterbrecher
- 48a, 48b: Gleichrichter
- 49: Transformator
- 50: Gleichspannungsquelle
- 52: Umrichter
- 54: MVDC-Netzwerk
- 56: Diode
- 58: Wechselspannungsnetzwerk
- 60: Spannungsversorgungssystem
- 62, 64, 66, 68: Mittelspannungs-Lasten und -Quellen
- 70a, 70b, 70c: Schutzsystem

## Patentansprüche

1. Modularer Multiniveau-Umrichter (10) zum Gleichrichten von wenigstens zwei Phasen einer Wechselspannung in eine Gleichspannung oder zum Wechselrichten einer Gleichspannung in wenigstens zwei Phasen einer Wechselspannung,
wobei der Umrichter (10) für jede Phase (16a, 16b, 16c) aus den wenigstens zwei Phasen einen Umrichterzweig (20a, 20b) aufweist und der Umrichterzweig aufweist:
in Reihe geschaltete erste Umrichterzellen (26), die die Phase mit einem ersten Gleichspannungsausgang (24) verbinden,
in Reihe geschaltete zweite Umrichterzellen (26), die die Phase mit einem zweiten Gleichspannungsausgang (22) verbinden,
wobei wenigstens eine Umrichterzelle aus den ersten und zweiten Umrichterzellen eine bipolare Umrichterzelle (26a) ist.

2. Umrichter (10) nach Anspruch 1, wobei wenigstens eine Umrichterzelle aus den ersten und zweiten Umrichterzellen eine unipolare Umrichterzelle (26b) ist.

3. Umrichter (10) nach Anspruch 1, wobei alle ersten und zweiten Umrichterzellen bipolare Umrichterzellen (26a) sind.

4. Umrichter (10) nach einem der vorhergehenden Ansprüche, weiter aufweisend:
eine Steuerung (30) zum Steuern von Halbleiterschaltern (34) der ersten und zweiten Umrichterzellen (26),
wobei die Steuerung (30) dazu ausgeführt ist, die Halbleiterschalter (34) derart anzusteuern, dass die Gleichspannung zwischen dem ersten und zweiten Gleichspannungsausgang zwischen einer Minimalspannung und einer Maximalspannung einstellbar ist,
wobei die Maximalspannung kleiner oder gleich der maximalen Spannung der wenigstens zwei Phasen ist,
wobei die Minimalspannung kleiner als 70 % der maximalen Spannung ist.

5. Spannungsversorgungssystem (60) umfassend:
einen Umrichter (10) nach einem der Ansprüche 1 bis 4,
wobei der Umrichter dazu ausgeführt ist, ein Gleichspannungsgerät (62, 64, 66, 68) mit variabler Gleichspannungsabgabe oder -aufnahme mit einem mehrphasigen Wechselspannungsnetz (58) zu verbinden.

6. Spannungsversorgungssystem (60) nach Anspruch 5,
wobei das Gleichspannungsgerät eine Gleichspannungslast, ein Gleichspannungs-Energiespeicher oder eine Gleichspannungsquelle ist.

7. Umrichtersystem (40) zum Verbinden wenigstens einer Wechselspannungsquelle (42, 52) mit einem Wechselspannungsnetz (58), das Umrichtersystem aufweisend:
wenigstens einen Gleichrichter (48a, 48b) zum Gleichrichten des Wechselstroms aus der Wechselspannungsquelle in einen Gleichstrom;
einen Umrichter (10) nach einem der Ansprüche 1 bis 4 zum Wechselrichten des Gleichstroms in die Wechselspannung des Wechselspannungsnetzes (58).

8. Umrichtersystem (40) nach Anspruch 7,
wobei der Gleichrichter einen passiven Gleichrichter oder einen unidirektionalen aktiven Gleichrichter umfasst.

9. Umrichtersystem (40) nach Anspruch 7 oder 8,
wobei der Gleichrichter derart optimiert ist, dass er geringe Oberschwingungen erzeugt.

10. Umrichtersystem (40) nach einem der Ansprüche 7 bis 9,
wobei der Gleichrichter derart optimiert ist, dass er einen hohen Leistungsfaktor bezüglich der Wechselspannungsquelle und/oder bezüglich des Generators aufweist.

11. Umrichterschutzsystem (70a, 70b, 70c), aufweisend:
einen Umrichter (10) nach einem der Ansprüche 1 bis 4,
einen Wechselspannungsunterbrecher (47a, 47b, 47c) für jede der Phasen,
eine Schutzschaltung (72) für jede der ersten und zweiten Umrichterzellen, wobei die Schutzschaltung antiparallele Thyristoren zum Überbrücken der Umrichterzelle (20) aufweist.

12. Netzwerk zum Übertragen von Mittel- oder Hochspannung, umfassend:
einen Umrichter (10) nach einem der Ansprüche 1 bis 4,
ein Gleichspannungsnetzwerk (54) zum Übertragen von Strom zu oder vom Umrichter,
wobei der Umrichter (10) zum Verarbeiten einer variablen Gleichspannung im Gleichspannungsnetzwerk (54) ausgeführt ist.

13. Netzwerk nach Anspruch 12, weiter umfassend wenigstens ein System ausgewählt aus der Gruppe bestehend aus:
einem Spannungsversorgungssystem nach einem der Ansprüche 5 und 6,
einem Umrichtersystem nach einem der Ansprüche 7 bis 10,
einem Umrichterschutzsystem nach Anspruch 11.

14. Verfahren zum Gleichrichten von wenigstens zwei Phasen einer Wechselspannung in eine Gleichspannung oder zum Wechselrichten einer Gleichspannung in wenigstens zwei Phasen einer Wechselspannung, umfassend die Schritte:
Umwandeln der Wechselspannungen jeder Phase in eine Gleichspannung mittels eines Umrichters (10) nach Anspruch 1,
Einstellen der Gleichspannung zwischen einer Minimalspannung und einer Maximalspannung, wobei die Maximalspannung kleiner oder gleich der maximalen Spannung der wenigstens zwei Phasen ist und die Minimalspannung kleiner als 70 % der maximalen Spannung ist.

15. Verwendung eines modularen Multiniveau-Matrix-Umrichters (10) zum Gleichrichten von wenigstens zwei Phasen einer Wechselspannung in eine Gleichspannung, die kleiner als die Maximalspannung der Wechselspannung ist.
